# EUROPÄISCHE PATENTSCHRIFT

(11) **EP 3 232 735 B1**
(45) Veröffentlichungstag und Bekanntmachung des Hinweises auf die Patenterteilung: **26.02.2020**
(21) Anmeldenummer: 17162945.4
(22) Anmeldetag: 27.03.2017
(51) Int. Cl.: H05B 7/10, F16B 17/00

(54) **TRAGARM ZUM TRAGEN EINER ELEKTRODE EINES LICHTBOGENOFENS UND VERFAHREN ZUM HERSTELLEN EINES SOLCHEN**
SUPPORTING ARM FOR SUPPORTING AN ELECTRODE OF AN ELECTRIC ARC FURNACE AND METHOD FOR PRODUCING SAME
BRAS PORTEUR POUR UNE ÉLECTRODE D'UN FOUR ÉLECTRIQUE À ARC ET SON PROCÉDÉ DE FABRICATION

(30) Priorität: 12.04.2016 DE 102016206028
(43) Veröffentlichungstag der Anmeldung: 18.10.2017
(73) Patentinhaber: SMS Group GmbH, 40237 Düsseldorf (DE)
(72) Erfinder: Schüring, Andreas, 45475 Mülheim (DE); Krausa, Steffen, 40233 Düsseldorf (DE)
(74) Vertreter: Klüppel, Walter

(56) Entgegenhaltungen:
- EP-A1- 0 594 272
- DE-A1- 3 644 547
- DE-A1- 19 716 934
- US-A- 4 349 954
- US-A1- 2005 105 964
- US-A1- 2008 213 037

## Beschreibung

Die Erfindung betrifft einen Tragarm zum Tragen einer Elektrode eines Lichtbogenofens, aufweisend wenigstens ein Tragarmprofil, das wenigstens zwei miteinander verbundene, stranggepresste Metallprofile umfasst.

Die Erfindung betrifft des Weiteren ein Verfahren zum Herstellen eines Tragarm zum Tragen einer Elektrode eines Lichtbogenofens, wobei wenigstens ein Tragarmprofil hergestellt wird, indem wenigstens zwei Metallprofile unter Verwendung eines Strangpressverfahrens hergestellt und miteinander verbunden werden.

Aus dem Stand der Technik ist es bekannt, einen Tragarm aus mehreren stranggepressten Metallprofilen herzustellen, die durch ein Schweißverfahren, insbesondere Lichtbogenschweißen, stoffschlüssig miteinander verbunden sind. Ein solcher Tragarm ist beispielsweise aus EP 0 594 272 A1 bekannt. In die stranggepressten Wandungen dieses Tragarms sind Kühlkanäle eingebracht. Hierdurch kann der Tragarm zu seiner ausreichenden Kühlung von einem geringen Kühlmittelmengenstrom durchströmt werden, so dass das Gewicht des Tragarms nur geringfügig erhöht wird. Das geringe Gewicht des Tragarms ist insbesondere bezüglich der Bewegungsdynamik des Tragarms von Vorteil.

Durch das herkömmliche Verschweißen der einzelnen stranggepressten Metallprofile zur Ausbildung eines Tragarms sind aufwändige mechanische Vorrichtungen notwendig. Auch muss herkömmlich bei der Konstruktion eines verschweißten Tragarms der Einfluss des Schweißens, insbesondere dessen negativer Einfluss auf die Festigkeit des Werkstoffs des Tragarms, wie beispielsweise eine Verringerung der Festigkeit des Werkstoffs in den mit Wärme während des Schweißens beaufschlagten Bereichen, berücksichtigt werden. Die konstruktive Kompensation dieses negativen Einflusses führt herkömmlich zu einer Überdimensionierung des Tragarms und damit zu einem höheren Tragarmgewicht.

Eine Aufgabe der Erfindung ist es, einen verbesserten und gewichtsreduzierten Tragarm zum Tragen einer Elektrode eines Lichtbogenofens bereitzustellen.

Diese Aufgabe wird durch die unabhängigen Patentansprüche gelöst. Vorteilhafte Ausgestaltungen sind insbesondere in den abhängigen Patentansprüchen angegeben, die jeweils für sich genommen oder in verschiedener Kombination miteinander einen Aspekt der Erfindung darstellen können.

Ein erfindungsgemäßer Tragarm zum Tragen einer Elektrode eines Lichtbogenofens umfasst wenigstens ein Tragarmprofil, das wenigstens zwei miteinander verbundene, stranggepresste Metallprofile umfasst, wobei die Metallprofile über wenigstens eine formschlüssige Verbindung miteinander verbunden sind.

Erfindungsgemäß werden die stranggepressten Metallprofile formschlüssig und nicht, wie herkömmlich, stoffschlüssig miteinander verbunden. Hierdurch entfällt das herkömmlich erforderliche Verschweißen von Metallprofilen zur Ausbildung eines Tragarmprofils. Dadurch muss bei der Erfindung bzw. bei der Konstruktion des erfindungsgemäßen Tragarms nicht der oben beschriebene negative Einfluss des Schweißens, also der Wärmeeintrag während des Schweißens in die Metallprofile und die damit einhergehende Verringerung der Festigkeit des Werkstoffs der Metallprofile, berücksichtigt werden. Der erfindungsgemäße Tragarm kann daher deutlich kleiner und mit geringeren Wandstärken ausgebildet werden, was mit einer deutlichen Gewichtsreduzierung einhergeht. Hierdurch wird die Massenträgheit des erfindungsgemäßen Tragarms reduziert, was sich positiv auf die Bewegungsdynamik des Tragarms bzw. die Genauigkeit und Schnelligkeit seiner Bewegungen auswirkt. Zudem kann eine Bewegungseinrichtung zum Bewegen des erfindungsgemäßen Tragarms vereinfacht bzw. kostengünstiger hergestellt werden. Durch den Entfall von Schweißvorgängen zur Ausbildung eines erfindungsgemäßen Tragarmprofils kann der Tragarm relativ schnell und kostengünstig hergestellt werden.

Die formschlüssige Verbindung ist vorzugsweise derart ausgebildet, dass die beiden Metallprofile mittels der formschlüssigen Verbindung gegeneinander verspannt werden. Hierdurch wird die Robustheit des Tragarms erhöht.

Die Metallprofile werden in einem Strangpressverfahren hergestellt. Vorzugsweise sind in wenigstens ein Metallprofil in Längsrichtung des Tragarmprofils verlaufende Kühlkanäle eingebracht, die von einem Kühlmedium, insbesondere einer Kühlflüssigkeit, durchströmbar sind. Hierdurch kann dieses Metallprofil bzw. das Tragarmprofil gekühlt werden. Ein Metallprofil kann aus einem Metall mit hoher elektrischer Leitfähigkeit, beispielsweise aus Aluminium oder einer Aluminiumlegierung, hergestellt sein.

Der Tragarm kann auch zwei oder mehrere erfindungsgemäße Tragarmprofile aufweisen, die zur Ausbildung des Tragarms miteinander verbunden sind. Alternativ kann der Tragarm durch ein einziges Tragarmprofil ausgebildet sein. Das Tragarmprofil kann auch drei, vier oder mehrere miteinander verbundene, stranggepresste Metallprofile aufweisen, die beispielsweise paarweise über wenigstens eine formschlüssige Verbindung miteinander verbunden sind.

Der Aufbau des erfindungsgemäßen Tragarms ermöglicht zudem eine bessere Verteilung des durch ihn geführten elektrischen Stroms. Bei herkömmlichen Tragarmen mit verschweißten und hierdurch elektrisch leitend miteinander verbundenen Metallprofilen kommt es aufgrund der jeweiligen Geometrie des Tragarms zur Bildung von Bereichen höherer Stromdichte und Bereichen niedrigerer Stromdichte. In den Bereichen höherer Stromdichte kommt es zwangsläufig zu einer stärkeren Erwärmung des Tragarms, und dies trotz der Tatsache, dass ein ausreichender Gesamtquerschnitt zur Übertragung des elektrischen Stroms zur Verfügung steht. Diese ungleichmäßige Verteilung des elektrischen Stroms über den Querschnitt des Tragarms tritt bei dem erfindungsgemäßen Tragarm nur geringfügig oder gar nicht auf, da insbesondere bei Metallprofilen aus Aluminium sich an der Oberfläche der Metallprofile eine Oxydschicht ausbildet, die einen höheren elektrischen Wiederstand aufweist, so dass die formschlüssig miteinander verbundenen Metallprofile elektrisch gegeneinander isoliert sind. Durch eine geschickte Einbringung des elektrischen Stroms an einer der getragenen Elektrode abgewandten Seite des Tragarmprofils bzw. Tragarms in die einzelnen Metallprofile wird eine gleichmäßige Verteilung des elektrischen Stroms auf den gesamten Querschnitt des Tragarms bzw. Tragarmprofils erreicht. Hierdurch werden lokalen Überhitzungen des Tragarmprofils vermieden.

Gemäß einer vorteilhaften Ausgestaltung ist die formschlüssige Verbindung unmittelbar über aneinander angrenzende Abschnitte der Metallprofile oder über wenigstens ein formschlüssig mit diesen Abschnitten verbundenes, zusätzliches Verbindungselement hergestellt. Die erste Alternative, nach der die für die formschlüssige Verbindung notwendigen Geometrien bereits an den stranggepressten Metallprofilen ausgebildet sind, hat den Vorteil, dass kein zusätzlicher Konstruktionsaufwand betrieben werden muss und keine zusätzlichen Bauteile erforderlich sind, was die Montage vereinfacht und Herstellungskosten senkt.

Nach einer weiteren vorteilhaften Ausgestaltung umfasst die formschlüssige Verbindung wenigstens eine an dem Abschnitt des einen Metallprofils angeordnete, sich in Längsrichtung des Tragarmprofils erstreckende, im Querschnitt bauchig ausgebildete Verbindungsaufnahme und wenigstens einen an dem Abschnitt des anderen Metallprofils angeordneten, sich in Längsrichtung des Tragarmprofils erstreckenden Verbindungsvorsprung, wobei der Querschnitt des Verbindungsvorsprungs komplementär zu dem Querschnitt der Aufnahme ausgebildet ist. Hiernach ist folglich die formschlüssige Verbindung unmittelbar über aneinander angrenzende Abschnitte der Metallprofile hergestellt. Durch Ausbildung der Verbindungsaufnahme mit dem bauchigen Querschnitt und die entsprechend bauchige bzw. komplementäre Ausbildung des Verbindungsvorsprungs kann ein Lösen der entsprechend formschlüssig miteinander verbundenen Metallprofile voneinander zuverlässig verhindert werden. Zur formschlüssigen Verbindung der Metallprofile kann der Verbindungsvorsprung in Längsrichtung des Metallprofils in die Verbindungsaufnahme eingeschoben werden. Alternativ oder additiv kann die Verbindungsaufnahme über den Verbindungsvorsprung geschoben werden.

Nach einer alternativen weiteren vorteilhaften Ausgestaltung umfasst die formschlüssige Verbindung wenigstens eine an dem Abschnitt des einen Metallprofils angeordnete, sich in Längsrichtung des Tragarmprofils erstreckende, im Querschnitt bauchig ausgebildete Verbindungsaufnahme, wenigstens eine an dem Abschnitt des anderen Metallprofils angeordnete, sich in Längsrichtung des Tragarmprofils erstreckende, im Querschnitt bauchig ausgebildete weitere Verbindungsaufnahme und wenigstens ein sich in Längsrichtung des Tragarmprofils erstreckendes, formschlüssig in die beiden Verbindungsaufnahmen eingreifendes Formschlusselement. Hiernach ist folglich die formschlüssige Verbindung über wenigstens ein formschlüssig mit diesen Abschnitten verbundenes, zusätzliches Verbindungselement, nämlich das Formschlusselement, hergestellt. Durch Ausbildung der Verbindungsaufnahmen mit bauchigen Querschnitten und eine entsprechend bauchige bzw. komplementäre Ausbildung der jeweilig in die Verbindungsaufnahmen eingreifenden Abschnitte des Formschlusselements kann ein Lösen der entsprechend formschlüssig miteinander verbundenen Metallprofile voneinander zuverlässig verhindert werden. Zur formschlüssigen Verbindung der Metallprofile kann das Formschlusselement in Längsrichtung des jeweiligen Metallprofils in die Verbindungsaufnahme des Metallprofils eingeschoben werden. Alternativ oder additiv kann die Verbindungsaufnahme des jeweiligen Metallprofils über das Formschlusselement geschoben werden. Das Formschlusselement kann aus einem Metall oder einer Metalllegierung hergestellt sein.

Nach einer alternativen weiteren vorteilhaften Ausgestaltung umfasst die formschlüssige Verbindung wenigstens eine an dem Abschnitt des einen Metallprofils angeordnete, sich in Längsrichtung des Tragarmprofils erstreckende, im Querschnitt bauchig ausgebildete Verbindungsaufnahme, wenigstens eine an dem Abschnitt des anderen Metallprofils angeordnete, sich in Längsrichtung des Tragarmprofils erstreckende, im Querschnitt bauchig ausgebildete weitere Verbindungsaufnahme und wenigstens eine sich in Längsrichtung des Tragarmprofils erstreckende, formschlüssig in die beiden Verbindungsaufnahmen eingreifende Formschlusseinheit, die wenigstens zwei jeweils in beide Verbindungsaufnahmen eingreifende Formschlussbauteile und wenigstens ein zwischen den beiden Formschlussbauteilen angeordnetes Verspannungselement aufweist, mit dem die beiden Formschlussbauteile voneinander weg mit Kraft beaufschlagt sind. Hiernach ist folglich die formschlüssige Verbindung über wenigstens ein formschlüssig mit diesen Abschnitten verbundenes, zusätzliches Verbindungselement, nämlich die Formschlusseinheit bzw. deren Formschlussbauteile, hergestellt. Durch Ausbildung der Verbindungsaufnahmen mit bauchigen Querschnitten und eine entsprechend bauchige bzw. komplementäre Ausbildung der jeweilig in die Verbindungsaufnahmen eingreifenden Abschnitte der Formschlussbauteile kann ein Lösen der entsprechend formschlüssig miteinander verbundenen Metallprofile voneinander zuverlässig verhindert werden. Zur formschlüssigen Verbindung der Metallprofile kann die Formschlusseinheit in Längsrichtung des jeweiligen Metallprofils in die Verbindungsaufnahme des Metallprofils eingeschoben werden. Alternativ oder additiv kann die Verbindungsaufnahme des jeweiligen Metallprofils über die Formschlusseinheit geschoben werden. Die Verspannung der beiden Formschlussbauteile gegen die Wandung der jeweiligen Verbindungsaufnahme kann erfolgen, nachdem die Formschlusseinheit in diese Verbindungsaufnahme eingefügt worden ist. Hierzu kann die Formgebung des Verspannungselements steuerbar sein. Das Verspannungselement und/oder die Formschlussbauteile kann bzw. können aus einem Metall oder einer Metalllegierung hergestellt sein.

Gemäß einer weiteren vorteilhaften Ausgestaltung ist innerhalb des Verbindungsvorsprungs bzw. des Formschlusselements bzw. des Verspannungselements wenigstens ein mit einem unter Druck stehenden Medium beaufschlagbarer, sich in Längsrichtung des Tragarmprofils erstreckender Hohlraum angeordnet. Hierdurch kann der Verbindungsvorsprung bzw. das Formschlusselement bzw. das Verspannungselement aufgeweitet und mit der Verbindungsaufnahme bzw. den Verbindungsaufnahmen verspannt werden. Dies geht mit einer Verspannung der formschlüssigen Verbindung einher.

Vorteilhafterweise ist das Formschlusselement bzw. das Verspannungselement durch eine Beaufschlagung des Hohlraums mit dem unter Druck stehenden Medium plastisch verformt. Dies ermöglicht das Einführen des Formschlusselements bzw. Verspannungselements in einem Zustand mit verringerter Querschnittsfläche in die jeweilige Verbindungsaufnahme, was das Einfügen des Formschlusselements bzw. der Formschlusseinheit in die jeweilige Verbindungsaufnahme vereinfacht. Anschließend kann der Hohlraum des Formschlusselements bzw. des Verspannungselements derart mit dem unter Druck stehenden Medium, insbesondere einer Flüssigkeit, beaufschlagt werden, dass sich das Formschlusselement bzw. das Verspannungselement aufweitet und hierbei plastisch verformt wird, um anschließend an der Wandung der jeweiligen Verbindungsaufnahme flächig anzuliegen. Nach der plastischen Verformung des Formschlusselements bzw. des Verspannungselements kann der Druck im Inneren des Hohlraums aufrechterhalten oder abgebaut werden.

Eine weitere vorteilhafte Ausgestaltung sieht vor, dass das Formschlusselement ein Strangpressprofil ist bzw. dass die Formschlussbauteile und/oder das Verspannungselement Strangpressprofile sind. Hierdurch sind auch diese Bauteile kostengünstig herstellbar.

Gemäß einer weiteren vorteilhaften Ausgestaltung ist jedes Metallprofil im Querschnitt L-förmig ausgebildet, wobei vier Metallprofile derart über jeweils wenigstens eine formschlüssige Verbindung paarweise miteinander verbunden sind, dass das Tragarmprofil als Hohlprofil mit rechteckigem Querschnitt ausgebildet ist, wobei die formschlüssigen Verbindungen an den in Längsrichtung des Tragarmprofils verlaufenden Seitenwänden des Tragarmprofils angeordnet sind. Durch die Verbindung der Metallprofile im Bereich der Seitenwände des Tragarmprofils werden die zu übertragenden Kräfte an den Fügestellen minimiert, was sich positiv auf die Dauerhaftigkeit der formschlüssigen Verbindungen auswirkt.

Eine weitere vorteilhafte Ausgestaltung sieht vor, dass jedes Metallprofil im Querschnitt U-förmig ausgebildet ist, wobei zwei Metallprofile derart über jeweils wenigstens zwei formschlüssige Verbindung miteinander verbunden sind, dass das Tragarmprofil als Hohlprofil mit rechteckigem Querschnitt bzw. kastenartig ausgebildet ist, wobei die formschlüssigen Verbindungen an den in Längsrichtung des Tragarmprofils und parallel zueinander verlaufenden Seitenwänden des Tragarmprofils angeordnet sind. Durch die Verbindung der Metallprofile im Bereich der Seitenwände des Tragarmprofils werden die zu übertragenden Kräfte an den Fügestellen minimiert, was sich positiv auf die Dauerhaftigkeit der formschlüssigen Verbindungen auswirkt. Alternativ können die Metallprofile im Querschnitt kalbkreisförmig oder eben ausgebildet sein.

Nach einer weiteren vorteilhaften Ausgestaltung umfasst der Tragarm wenigstens zwei stoffschlüssig miteinander verbundene Tragarmprofile, die durch Elektronenstrahlschweißen oder Rührreibschweißen stoffschlüssig miteinander verbunden sind. Diese Schweißverfahren zeichnen sich insbesondere durch eine sehr geringe Wärmeeintragung in die zu verbindenden Tragarmprofile aus. Dadurch wird beim entsprechenden Fügen der Tragarmprofile die Festigkeit des Werkstoffs der Metallprofile lediglich geringfügig bis gar nicht herabgesetzt. Durch diese Schweißverfahren wird zudem die Sicherheit gegen ein Versagen eines entsprechend konstruierten Tragarms deutlich erhöht, da die durch das Schweißen bedingten Wärmeeintragsbereiche nur noch eine untergeordnete bzw. keine Rolle spielen.

Nach einem erfindungsgemäßen Verfahren zum Herstellen eines Tragarms zum Tragen einer Elektrode eines Lichtbogenofens, wird wenigstens ein Tragarmprofil hergestellt, indem wenigstens zwei Metallprofile unter Verwendung eines Strangpressverfahrens hergestellt und miteinander verbunden werden, wobei die Metallprofile mittels wenigstens einer formschlüssigen Verbindung formschlüssig miteinander verbunden werden.

Mit dem Verfahren sind die oben mit Bezug auf den Tragarm genannten Vorteile entsprechend verbunden. Insbesondere kann der oben beschriebene Tragarm gemäß einer seiner Ausgestaltungen oder einer beliebigen Kombination von wenigstens zwei dieser Ausgestaltungen miteinander unter Verwendung des Verfahrens hergestellt werden.

Gemäß einer vorteilhaften Ausgestaltung werden formschlüssig zusammenwirkende Komponenten der formschlüssigen Verbindung gegeneinander verspannt. Hierdurch wird die Dauerhaftigkeit und Robustheit der formschlüssigen Verbindung erhöht. Das Verspannen der Komponenten der formschlüssigen Verbindung gegeneinander kann entsprechend den oben mit Bezug auf den Tragarm genannten Ausgestaltungen erfolgen.

Nach einer weiteren vorteilhaften Ausgestaltung werden wenigstens zwei Tragarmprofile hergestellt und durch Elektronenstrahlschweißen oder Rührreibschweißen stoffschlüssig miteinander verbunden. Mit dieser Ausgestaltung sind die oben mit Bezug auf die entsprechende Ausgestaltung des Tragarms genannten Vorteile entsprechend verbunden.

Im Folgenden wird die Erfindung unter Bezugnahme auf die anliegenden Figuren anhand von bevorzugten Ausführungsformen exemplarisch erläutert, wobei die nachfolgend erläuterten Merkmale sowohl jeweils für sich genommen als auch in unterschiedlicher Kombination miteinander einen Aspekt der Erfindung darstellen können. Es zeigen:
- Figur 1:: eine schematische Darstellung eines Querschnitts durch ein Ausführungsbeispiel für einen erfindungsgemäßen Tragarm;
- Figur 2:: eine schematische Darstellung eines Querschnitts durch ein weiteres Ausführungsbeispiel für einen erfindungsgemäßen Tragarm;
- Figur 3:: eine schematische Darstellung eines Querschnitts durch ein weiteres Ausführungsbeispiel für einen erfindungsgemäßen Tragarm;
- Figur 4:: eine schematische Darstellung eines Querschnitts durch ein weiteres Ausführungsbeispiel für einen erfindungsgemäßen Tragarm;
- Figur 5:: eine schematische Darstellung eines Querschnitts durch ein weiteres Ausführungsbeispiel für einen erfindungsgemäßen Tragarm;
- Figur 6:: eine schematische Detaildarstellung eines Querschnitts durch ein weiteres Ausführungsbeispiel für einen erfindungsgemäßen Tragarm;
- Figur 7:: eine schematische Detaildarstellung eines Querschnitts durch ein weiteres Ausführungsbeispiel für einen erfindungsgemäßen Tragarm;
- Figur 8:: eine schematische Detaildarstellung eines Querschnitts durch ein weiteres Ausführungsbeispiel für einen erfindungsgemäßen Tragarm; und
- Figur 9:: eine schematische Detaildarstellung eines Querschnitts durch ein weiteres Ausführungsbeispiel für einen erfindungsgemäßen Tragarm.

In den Figuren sind gleiche bzw. funktionsgleiche Bauteile mit denselben Bezugszeichen versehen.

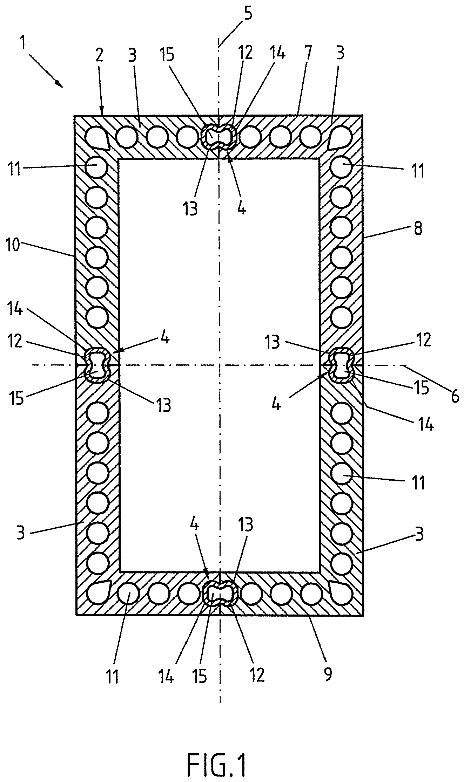

Figur 1 zeigt eine schematische Darstellung eines Querschnitts durch ein Ausführungsbeispiel für einen erfindungsgemäßen Tragarm 1 zum Tragen einer nicht gezeigten Elektrode eines nicht gezeigten Lichtbogenofens.

Der Tragarm 1 umfasst ein Tragarmprofil 2, das vier miteinander verbundene, stranggepresste Metallprofile 3 umfasst. Jedes Metallprofil 3 ist im Querschnitt L-förmig ausgebildet. Die Metallprofile 3 sind derart über jeweils wenigstens eine formschlüssige Verbindung 4 paarweise miteinander verbunden, dass das Tragarmprofil 2 als Hohlprofil mit rechteckigem Querschnitt ausgebildet ist. Die Metallprofile 3 sind bezüglich der senkrecht aufeinander stehenden Verbindungsebenen 5 und 6 voneinander getrennt. Die formschlüssigen Verbindungen 4 sind an den in der senkrecht zur Zeichnungsebene ausgerichteten Längsrichtung des Tragarmprofils 2 verlaufenden Seitenwänden 7 bis 10 des Tragarmprofils 2 angeordnet. An jedem Metallprofil 3 sind mehrere in Längsrichtung des Tragarmprofils 2 verlaufende Kühlkanäle 11 eingebracht. Die Kühlkanäle 7 können während der Herstellung des jeweiligen Metallprofils 3 unter Verwendung eines Strangpressverfahrens oder nachträglich in die Metallprofile 3 eingebracht werden.

Jede formschlüssige Verbindung 4 ist über ein formschlüssig mit den aneinander angrenzenden Abschnitten der jeweiligen Metallprofile 3 verbundenes, zusätzliches Verbindungselement hergestellt. Insbesondere umfasst jede formschlüssige Verbindung 4 eine an dem Abschnitt des einen Metallprofils 3 angeordnete, sich in Längsrichtung des Tragarmprofils 2 erstreckende, im Querschnitt bauchig ausgebildete Verbindungsaufnahme 13, eine an dem Abschnitt des anderen Metallprofils 3 angeordnete, sich in Längsrichtung des Tragarmprofils 2 erstreckende, im Querschnitt bauchig ausgebildete weitere Verbindungsaufnahme 14 und ein sich in Längsrichtung des Tragarmprofils 2 erstreckendes, formschlüssig in die beiden Verbindungsaufnahmen 13 und 14 eingreifendes Formschlusselement 12, welches das Verbindungselement darstellt.

Innerhalb jedes Formschlusselements 12 ist ein mit einem unter Druck stehenden Medium beaufschlagbarer, sich in Längsrichtung des Tragarmprofils 2 erstreckender Hohlraum 15 angeordnet. Jedes Formschlusselement 12 kann durch eine Beaufschlagung des jeweiligen Hohlraums 15 mit dem unter Druck stehenden Medium plastisch verformt sein. Jedes Formschlusselement 12 kann ein Strangpressprofil sein.

Der Tragarm 1 kann wenigstens zwei stoffschlüssig miteinander verbundene Tragarmprofile 2 aufweisen, die durch Elektronenstrahlschweißen oder Rührreibschweißen stoffschlüssig miteinander verbunden sind.

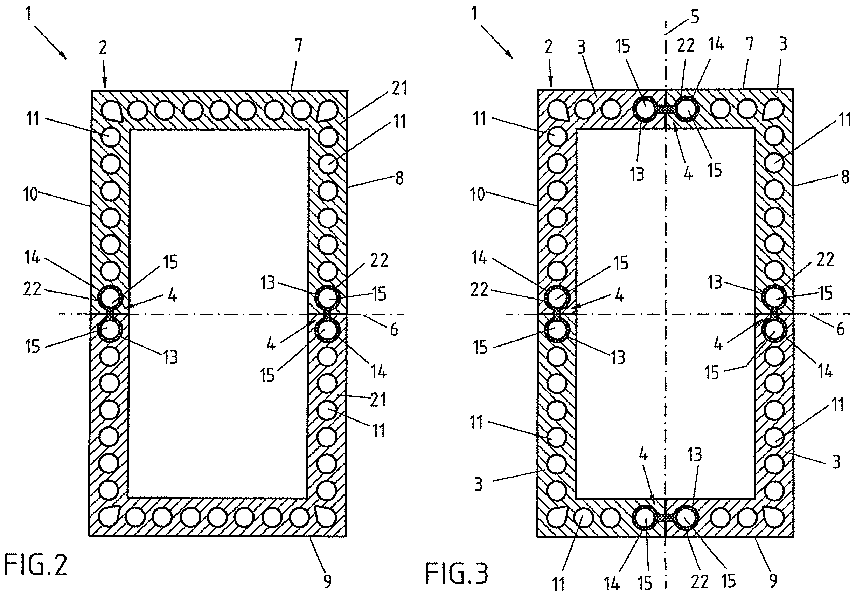

Figur 2 zeigt eine schematische Darstellung eines Querschnitts durch ein weiteres Ausführungsbeispiel für einen erfindungsgemäßen Tragarm 1 zum Tragen einer nicht gezeigten Elektrode eines nicht gezeigten Lichtbogenofens.

Der Tragarm 1 umfasst ein Tragarmprofil 2, das zwei miteinander verbundene, stranggepresste Metallprofile 21 umfasst. Jedes Metallprofil 21 ist im Querschnitt U-förmig ausgebildet. Die beiden Metallprofile 21 sind derart über zwei formschlüssige Verbindungen 4 miteinander verbunden, dass das Tragarmprofil 2 als Hohlprofil mit rechteckigem Querschnitt bzw. kastenförmig ausgebildet ist. Die Metallprofile 21 sind bezüglich der Verbindungsebene 6 voneinander getrennt. Die formschlüssigen Verbindungen 4 sind an den in der senkrecht zur Zeichnungsebene ausgerichteten Längsrichtung des Tragarmprofils 2 verlaufenden Seitenwänden 8 und 10 des Tragarmprofils 2 angeordnet. An jedem Metallprofil 21 sind mehrere in Längsrichtung des Tragarmprofils 2 verlaufende Kühlkanäle 11 eingebracht. Die Kühlkanäle 7 können während der Herstellung des jeweiligen Metallprofils 21 unter Verwendung eines Strangpressverfahrens oder nachträglich in die Metallprofile 21 eingebracht werden.

Jede formschlüssige Verbindung 4 ist über ein formschlüssig mit den aneinander angrenzenden Abschnitten der jeweiligen Metallprofile 21 verbundenes, zusätzliches Verbindungselement hergestellt. Insbesondere umfasst jede formschlüssige Verbindung 4 eine an dem Abschnitt des einen Metallprofils 21 angeordnete, sich in Längsrichtung des Tragarmprofils 2 erstreckende, im Querschnitt bauchig, insbesondere kreisförmig, ausgebildete Verbindungsaufnahme 13, eine an dem Abschnitt des anderen Metallprofils 21 angeordnete, sich in Längsrichtung des Tragarmprofils 2 erstreckende, im Querschnitt bauchig, insbesondere kreisförmig, ausgebildete weitere Verbindungsaufnahme 14 und ein sich in Längsrichtung des Tragarmprofils 2 erstreckendes, formschlüssig in die beiden Verbindungsaufnahmen 13 und 14 eingreifendes Formschlusselement 22, welches das Verbindungselement darstellt.

Innerhalb jedes Formschlusselements 22 sind zwei mit einem unter Druck stehenden Medium beaufschlagbare, sich in Längsrichtung des Tragarmprofils 2 erstreckende Hohlräume 15 angeordnet. Jedes Formschlusselement 22 kann durch eine Beaufschlagung des jeweiligen Hohlraums 15 mit dem unter Druck stehenden Medium plastisch verformt sein. Jedes Formschlusselement 22 kann ein Strangpressprofil sein.

Der Tragarm 1 kann wenigstens zwei stoffschlüssig miteinander verbundene Tragarmprofile 2 aufweisen, die durch Elektronenstrahlschweißen oder Rührreibschweißen stoffschlüssig miteinander verbunden sind.

Figur 3 zeigt eine schematische Darstellung eines Querschnitts durch ein weiteres Ausführungsbeispiel für einen erfindungsgemäßen Tragarm 1 zum Tragen einer nicht gezeigten Elektrode eines nicht gezeigten Lichtbogenofens. Dieser Tragarm 1 unterscheidet sich dadurch von dem in Figur 1 gezeigten Ausführungsbeispiel, dass die Verbindungsaufnahmen 13 und 14 und die Formschlusselemente 22 entsprechend dem in Figur 2 gezeigten Ausführungsbeispiel ausgebildet sind. Zur Vermeidung von Wiederholungen wird auf die obige Beschreibung zu den Figuren 1 und 2 verwiesen.

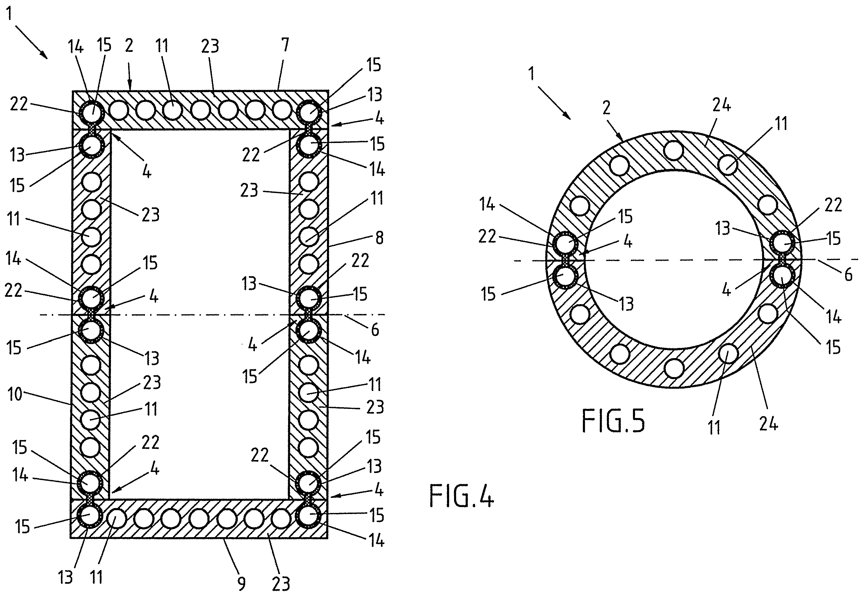

Figur 4 zeigt eine schematische Darstellung eines Querschnitts durch ein weiteres Ausführungsbeispiel für einen erfindungsgemäßen Tragarm 1 zum Tragen einer nicht gezeigten Elektrode eines nicht gezeigten Lichtbogenofens. Dieser Tragarm 1 unterscheidet sich insbesondere dadurch von den in den Figuren 1 bis 3 gezeigten Ausführungsbeispielen, dass die Metallprofile 23 eben ausgebildet sind, wobei sechs Metallprofile 23 vorhanden sind, die paarweise formschlüssig miteinander verbunden wird. Zur Vermeidung von Wiederholungen wird im Übrigen auch die obige Beschreibung zu den Figuren 1 bis 3 verwiesen.

Figur 5 zeigt eine schematische Darstellung eines Querschnitts durch ein weiteres Ausführungsbeispiel für einen erfindungsgemäßen Tragarm 1 zum Tragen einer nicht gezeigten Elektrode eines nicht gezeigten Lichtbogenofens. Im Unterschied zu den in den Figuren 1 bis 4 gezeigten Ausführungsbeispielen sind die beiden Metallprofile 24 im Querschnitt kalbkreisförmig ausgebildet. Zur Vermeidung von Wiederholungen wird im Übrigen auch die obige Beschreibung zu den Figuren 1 bis 3 verwiesen.

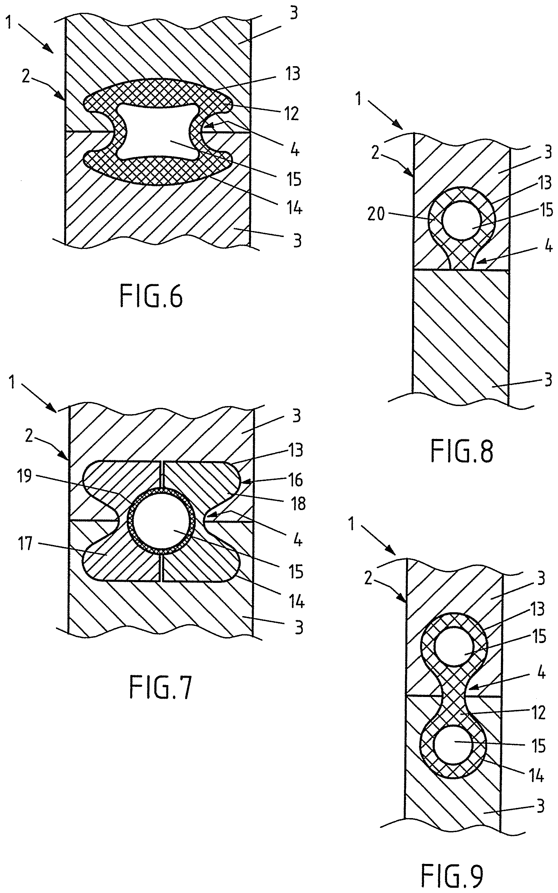

Figur 6 zeigt eine schematische Detaildarstellung eines Querschnitts durch ein weiteres Ausführungsbeispiel für einen erfindungsgemäßen Tragarm 1. Es ist ein Bereich des Tragarms 1 gezeigt, in dem zwei aneinander angrenzende Abschnitte von zwei Metallprofilen 3 des Tragarmprofils 2 angeordnet sind. Die beiden Metallprofile 3 sind über eine formschlüssige Verbindung 4 formschlüssig miteinander verbunden. Die übrigen, nicht gezeigten Metallprofile des Tragarmprofils 2 können entsprechend formschlüssig miteinander verbunden sein.

Die formschlüssige Verbindung 4 ist über wenigstens ein formschlüssig mit den Abschnitten der Metallprofile 3 verbundenes, zusätzliches Verbindungselement hergestellt. Insbesondere umfasst die formschlüssige Verbindung 4 eine an dem Abschnitt des einen Metallprofils 3 angeordnete, sich in Längsrichtung des Tragarmprofils 2 erstreckende, im Querschnitt bauchig ausgebildete Verbindungsaufnahme 13, eine an dem Abschnitt des anderen Metallprofils 3 angeordnete, sich in Längsrichtung des Tragarmprofils 2 erstreckende, im Querschnitt bauchig ausgebildete weitere Verbindungsaufnahme 14 und ein sich in Längsrichtung des Tragarmprofils 2 erstreckendes, formschlüssig in die beiden Verbindungsaufnahmen 13 und 14 eingreifendes Formschlusselement 12, welches das Verbindungselement darstellt.

Innerhalb des Formschlusselements 12 ist ein mit einem unter Druck stehenden Medium beaufschlagbarer, sich in Längsrichtung des Tragarmprofils 2 erstreckender Hohlraum 15 angeordnet. Das Formschlusselement 12 kann durch eine Beaufschlagung des jeweiligen Hohlraums 15 mit dem unter Druck stehenden Medium plastisch verformt sein. Das Formschlusselement 12 kann ein Strangpressprofil sein.

Der Tragarm 1 kann wenigstens zwei stoffschlüssig miteinander verbundene Tragarmprofile 2 aufweisen, die durch Elektronenstrahlschweißen oder Rührreibschweißen stoffschlüssig miteinander verbunden sind.

Figur 7 zeigt eine schematische Detaildarstellung eines Querschnitts durch ein weiteres Ausführungsbeispiel für einen erfindungsgemäßen Tragarm 1. Es ist ein Bereich des Tragarms 1 gezeigt, in dem zwei aneinander angrenzende Abschnitte von zwei Metallprofilen 3 des Tragarmprofils 2 angeordnet sind. Die beiden Metallprofile 3 sind über eine formschlüssige Verbindung 4 formschlüssig miteinander verbunden. Die übrigen, nicht gezeigten Metallprofile des Tragarmprofils 2 können entsprechend formschlüssig miteinander verbunden sein.

Die formschlüssige Verbindung 4 ist über wenigstens ein formschlüssig mit den Abschnitten der Metallprofile 3 verbundenes, zusätzliches Verbindungselement hergestellt. Insbesondere umfasst die formschlüssige Verbindung 4 eine an dem Abschnitt des einen Metallprofils 3 angeordnete, sich in Längsrichtung des Tragarmprofils 2 erstreckende, im Querschnitt bauchig ausgebildete Verbindungsaufnahme 13, eine an dem Abschnitt des anderen Metallprofils 3 angeordnete, sich in Längsrichtung des Tragarmprofils 2 erstreckende, im Querschnitt bauchig ausgebildete weitere Verbindungsaufnahme 14 und eine sich in Längsrichtung des Tragarmprofils 2 erstreckende, formschlüssig in die beiden Verbindungsaufnahmen 13 und 14 eingreifende Formschlusseinheit 16, die zwei jeweils in beide Verbindungsaufnahmen 13 und 14 eingreifende Formschlussbauteile 17 und 18 und ein zwischen den beiden Formschlussbauteilen 17 und 18 angeordnetes Verspannungselement 19 aufweist, mit dem die beiden Formschlussbauteile 17 und 18 voneinander weg mit Kraft beaufschlagt sind.

Innerhalb des Verspannungselements 19 ist ein mit einem unter Druck stehenden Medium beaufschlagbarer, sich in Längsrichtung des Tragarmprofils 2 erstreckender Hohlraum 15 angeordnet. Das Verspannungselement 19 kann durch eine Beaufschlagung des Hohlraums 15 mit dem unter Druck stehenden Medium plastisch verformt sein. Das Verspannungselement 19 kann ein Strangpressprofil sein. In dem gezeigten verspannten Zustand greift die Formschlusseinheit 16 formschlüssig in jede Verbindungsaufnahme 13 bzw. 14 ein. Hierzu sind die in die jeweilige Verbindungsaufnahme 13 bzw. 14 eingreifenden Abschnitte der Formschlusseinheit 16 bauchig bzw. komplementär zu den Verbindungsaufnahmen 13 und 14 ausgebildet.

Der Tragarm 1 kann wenigstens zwei stoffschlüssig miteinander verbundene Tragarmprofile 2 aufweisen, die durch Elektronenstrahlschweißen oder Rührreibschweißen stoffschlüssig miteinander verbunden sind.

Figur 8 zeigt eine schematische Detaildarstellung eines Querschnitts durch ein weiteres Ausführungsbeispiel für einen erfindungsgemäßen Tragarm 1. Es ist ein Bereich des Tragarms 1 gezeigt, in dem zwei aneinander angrenzende Abschnitte von zwei Metallprofilen 3 des Tragarmprofils 2 angeordnet sind. Die beiden Metallprofile 3 sind über eine formschlüssige Verbindung 4 formschlüssig miteinander verbunden. Die übrigen, nicht gezeigten Metallprofile des Tragarmprofils 2 können entsprechend formschlüssig miteinander verbunden sein.

Die formschlüssige Verbindung 4 ist unmittelbar über aneinander angrenzende Abschnitte der Metallprofile 3 hergestellt. Insbesondere umfasst die formschlüssige Verbindung 4 eine an dem Abschnitt des einen Metallprofils 3 angeordnete, sich in Längsrichtung des Tragarmprofils 2 erstreckende, im Querschnitt bauchig ausgebildete Verbindungsaufnahme 13 und einen an dem Abschnitt des anderen Metallprofils 3 angeordneten, sich in Längsrichtung des Tragarmprofils 2 erstreckenden Verbindungsvorsprung 20, wobei der Querschnitt des Verbindungsvorsprungs 20 komplementär zu dem Querschnitt der Verbindungsaufnahme 13 ausgebildet ist.

Innerhalb des Verbindungsvorsprungs 20 ist ein mit einem unter Druck stehenden Medium beaufschlagbarer, sich in Längsrichtung des Tragarmprofils 2 erstreckender Hohlraum 15 angeordnet. Der Verbindungsvorsprung 20 kann durch eine Beaufschlagung des Hohlraums 15 mit dem unter Druck stehenden Medium plastisch verformt sein.

Der Tragarm 1 kann wenigstens zwei stoffschlüssig miteinander verbundene Tragarmprofile 2 aufweisen, die durch Elektronenstrahlschweißen oder Rührreibschweißen stoffschlüssig miteinander verbunden sind.

Figur 9 zeigt eine schematische Detaildarstellung eines Querschnitts durch ein weiteres Ausführungsbeispiel für einen erfindungsgemäßen Tragarm 1. Es ist ein Bereich des Tragarms 1 gezeigt, in dem zwei aneinander angrenzende Abschnitte von zwei Metallprofilen 3 des Tragarmprofils 2 angeordnet sind. Die beiden Metallprofile 3 sind über eine formschlüssige Verbindung 4 formschlüssig miteinander verbunden. Die übrigen, nicht gezeigten Metallprofile des Tragarmprofils 2 können entsprechend formschlüssig miteinander verbunden sein.

Die formschlüssige Verbindung 4 ist über ein formschlüssig mit den Abschnitten der Metallprofile 3 verbundenes, zusätzliches Verbindungselement hergestellt. Insbesondere umfasst die formschlüssige Verbindung 4 eine an dem Abschnitt des einen Metallprofils 3 angeordnete, sich in Längsrichtung des Tragarmprofils 2 erstreckende, im Querschnitt bauchig ausgebildete Verbindungsaufnahme 13, eine an dem Abschnitt des anderen Metallprofils 3 angeordnete, sich in Längsrichtung des Tragarmprofils 2 erstreckende, im Querschnitt bauchig ausgebildete weitere Verbindungsaufnahme 14 und ein sich in Längsrichtung des Tragarmprofils 2 erstreckendes, formschlüssig in die beiden Verbindungsaufnahmen 13 und 14 eingreifendes Formschlusselement 12, welches das Verbindungselement darstellt.

Innerhalb des Formschlusselements 12 sind zwei mit einem unter Druck stehenden Medium beaufschlagbare, sich in Längsrichtung des Tragarmprofils 2 erstreckende Hohlräume 15 angeordnet. Das Formschlusselement 12 kann durch eine Beaufschlagung der Hohlräume 15 mit dem unter Druck stehenden Medium plastisch verformt sein. Das Formschlusselement 12 kann ein Strangpressprofil sein.

Der Tragarm 1 kann wenigstens zwei stoffschlüssig miteinander verbundene Tragarmprofile 2 aufweisen, die durch Elektronenstrahlschweißen oder Rührreibschweißen stoffschlüssig miteinander verbunden sind.

### Bezugszeichenliste

- 1: Tragarm
- 2: Tragarmprofil
- 3: Metallprofil
- 4: formschlüssige Verbindung
- 5: Verbindungsebene
- 6: Verbindungsebene
- 7: Seitenwand
- 8: Seitenwand
- 9: Seitenwand
- 10: Seitenwand
- 11: Kühlkanal
- 12: Formschlusselement
- 13: Verbindungsaufnahme
- 14: Verbindungsaufnahme
- 15: Hohlraum
- 16: Formschlusseinheit
- 17: Formschlussbauteil
- 18: Formschlussbauteil
- 19: Verspannungselement
- 20: Verbindungsvorsprung
- 21: Metallprofil
- 22: Formschlusselement
- 23: Metallprofil

## Patentansprüche

1. Tragarm (1) zum Tragen einer Elektrode eines Lichtbogenofens, aufweisend wenigstens ein Tragarmprofil (2), das wenigstens zwei miteinander verbundene, stranggepresste Metallprofile (3, 21, 23) umfasst, **dadurch gekennzeichnet, dass** die Metallprofile (3, 21, 23) über wenigstens eine formschlüssige Verbindung (4) miteinander verbunden sind.

2. Tragarm (1) nach Anspruch 1, **dadurch gekennzeichnet, dass** die formschlüssige Verbindung (4) unmittelbar über aneinander angrenzende Abschnitte der Metallprofile (3, 21, 23) oder über wenigstens ein formschlüssig mit diesen Abschnitten verbundenes, zusätzliches Verbindungselement (12, 17, 18, 22) hergestellt ist.

3. Tragarm (1) nach Anspruch 2, **dadurch gekennzeichnet, dass** die formschlüssige Verbindung (4) wenigstens eine an dem Abschnitt des einen Metallprofils (3, 21, 23) angeordnete, sich in Längsrichtung des Tragarmprofils (2) erstreckende, im Querschnitt bauchig ausgebildete Verbindungsaufnahme (13) und wenigstens einen an dem Abschnitt des anderen Metallprofils (3, 21, 23) angeordneten, sich in Längsrichtung des Tragarmprofils (2) erstreckenden Verbindungsvorsprung (20) aufweist, wobei der Querschnitt des Verbindungsvorsprungs (20) komplementär zu dem Querschnitt der Verbindungsaufnahme (13) ausgebildet ist.

4. Tragarm (1) nach Anspruch 2, **dadurch gekennzeichnet, dass** die formschlüssige Verbindung (4) wenigstens eine an dem Abschnitt des einen Metallprofils (3, 21, 23) angeordnete, sich in Längsrichtung des Tragarmprofils (2) erstreckende, im Querschnitt bauchig ausgebildete Verbindungsaufnahme (13), wenigstens eine an dem Abschnitt des anderen Metallprofils (3, 21, 23) angeordnete, sich in Längsrichtung des Tragarmprofils (2) erstreckende, im Querschnitt bauchig ausgebildete weitere Verbindungsaufnahme (14) und wenigstens ein sich in Längsrichtung des Tragarmprofils (2) erstreckendes, formschlüssig in die beiden Verbindungsaufnahmen (13, 14) eingreifendes Formschlusselement (12, 22) aufweist.

5. Tragarm (1) nach Anspruch 2, **dadurch gekennzeichnet, dass** die formschlüssige Verbindung (4) wenigstens eine an dem Abschnitt des einen Metallprofils (3, 21, 23) angeordnete, sich in Längsrichtung des Tragarmprofils (2) erstreckende, im Querschnitt bauchig ausgebildete Verbindungsaufnahme (13), wenigstens eine an dem Abschnitt des anderen Metallprofils (3, 21, 23) angeordnete, sich in Längsrichtung des Tragarmprofils (2) erstreckende, im Querschnitt bauchig ausgebildete weitere Verbindungsaufnahme (14) und wenigstens eine sich in Längsrichtung des Tragarmprofils (2) erstreckende, formschlüssig in die beiden Verbindungsaufnahmen (13, 14) eingreifende Formschlusseinheit (16) aufweist, die wenigstens zwei jeweils in beide Verbindungsaufnahmen (13, 14) eingreifende Formschlussbauteile (17, 18) und wenigstens ein zwischen den beiden Formschlussbauteilen (17, 18) angeordnetes Verspannungselement (19) aufweist, mit dem die beiden Formschlussbauteile (17, 18) voneinander weg mit Kraft beaufschlagt sind.

6. Tragarm (1) nach einem der Ansprüche 3 bis 5, **dadurch gekennzeichnet, dass** innerhalb des Verbindungsvorsprungs (20) bzw. des Formschlusselements (12, 22) bzw. des Verspannungselements (19) wenigstens ein mit einem unter Druck stehenden Medium beaufschlagbarer, sich in Längsrichtung des Tragarmprofils (2) erstreckender Hohlraum (15) angeordnet ist.

7. Tragarm (1) nach Anspruch 6, **dadurch gekennzeichnet, dass** das Formschlusselement (12, 22) bzw. das Verspannungselement (19) durch eine Beaufschlagung des Hohlraums (15) mit dem unter Druck stehenden Medium plastisch verformt ist.

8. Tragarm (1) nach einem der Ansprüche 4 bis 7, **dadurch gekennzeichnet, dass** das Formschlusselement (12, 22) ein Strangpressprofil ist bzw. dass die Formschlussbauteile (17, 18) und/oder das Verspannungselement (19) Strangpressprofile sind.

9. Tragarm (1) nach einem der Ansprüche 1 bis 8, **dadurch gekennzeichnet, dass** jedes Metallprofil (3) im Querschnitt L-förmig ausgebildet ist, wobei vier Metallprofile (3) derart über jeweils wenigstens eine formschlüssige Verbindung (4) paarweise miteinander verbunden sind, dass das Tragarmprofil (2) als Hohlprofil mit rechteckigem Querschnitt ausgebildet ist, wobei die formschlüssigen Verbindungen (4) an den in Längsrichtung des Tragarmprofils (2) verlaufenden Seitenwänden (7, 8, 9, 10) des Tragarmprofils (2) angeordnet sind.

10. Tragarm (1) nach einem der Ansprüche 1 bis 8, **dadurch gekennzeichnet, dass** jedes Metallprofil (21) im Querschnitt U-förmig ausgebildet ist, wobei zwei Metallprofile (21) derart über wenigstens zwei formschlüssige Verbindungen (4) miteinander verbunden sind, dass das Tragarmprofil (2) als Hohlprofil mit rechteckigem Querschnitt ausgebildet ist, wobei die formschlüssigen Verbindungen (4) an den in Längsrichtung des Tragarmprofils (2) und parallel zueinander verlaufenden Seitenwänden (7, 9; 8, 10) des Tragarmprofils (2) angeordnet sind.

11. Tragarm (1) nach einem der Ansprüche 1 bis 10, **gekennzeichnet durch** wenigstens zwei stoffschlüssig miteinander verbundene Tragarmprofile (2), die durch Elektronenstrahlschweißen oder Rührreibschweißen stoffschlüssig miteinander verbunden sind.

12. Verfahren zum Herstellen eines Tragarms (1) zum Tragen einer Elektrode eines Lichtbogenofens, wobei wenigstens ein Tragarmprofil (2) hergestellt wird, indem wenigstens zwei Metallprofile (3, 21, 23) unter Verwendung eines Strangpressverfahrens hergestellt und miteinander verbunden werden, **dadurch gekennzeichnet, dass** die Metallprofile (3, 21, 23) mittels wenigstens einer formschlüssigen Verbindung (4) formschlüssig miteinander verbunden werden.

13. Verfahren nach Anspruch 12, **dadurch gekennzeichnet, dass** formschlüssig zusammenwirkende Komponenten der formschlüssigen Verbindung (4) gegeneinander verspannt werden.

14. Verfahren nach Anspruch 12 oder 13, **dadurch gekennzeichnet, dass** wenigstens zwei Tragarmprofile (2) hergestellt und durch Elektronenstrahlschweißen oder Rührreibschweißen stoffschlüssig miteinander verbunden werden.

## Claims

1. Support arm (1) for supporting an electrode of an arc furnace, comprising at least one support arm section (2), which comprises at least two extruded metal profile members (3, 21, 23) connected together, **characterised in that** the metal profile members (3, 21, 23) are connected together by way of at least one mechanically positive connection (4).

2. Support arm (1) according to claim 1, **characterised in that** the mechanically positive connection (4) is produced directly by way of mutually adjoining sections of the metal profile members (3, 21, 23) or by way of at least one additional connecting element (12, 17, 18, 22) mechanically positively connected with these sections.

3. Support arm (1) according to claim 2, **characterised in that** the mechanically positive connection (4) comprises at least one connecting receptacle (13), which is arranged at the section of the one metal profile member (3, 21, 23) and which extends in longitudinal direction of the support arm profile member (2) and is formed to be bulged in cross-section, and at least one connecting projection (20), which is arranged at the section of the other metal profile member (3, 21, 23) and which extends in longitudinal direction of the support arm profile member (2), wherein the cross-section of the connecting projection (20) is formed to be complementary with the cross-section of the connecting receptacle (13).

4. Support arm (1) according to claim 2, **characterised in that** the mechanically positive connection (4) comprises at least one connecting receptacle (13), which is arranged at the section of the one metal profile member (3, 21, 23) and which extends in longitudinal direction of the support arm profile member (2) and is formed to be bulged in cross-section, at least one further connecting receptacle (14), which is arranged at the section of the other metal profile member (3, 21, 23) and which extends in longitudinal direction of the support arm profile member (2) and is formed to be bulged in cross-section, and at least one interlocking element (12, 22) extending in the longitudinal direction of the support arm profile member (2) and mechanically positively engaging in the two connecting receptacles (13, 14).

5. Support arm (1) according to claim 2, **characterised in that** the mechanically positive connection (4) comprises at least one connecting receptacle (13), which is arranged at the section of the one metal profile member (3, 21, 23) and which extends in the longitudinal direction of the support arm profile member (2) and is formed to be bulged in cross-section, at least one further connecting receptacle (14), which is arranged at the section of the other metal profile member (3, 21, 23) and which extends in the longitudinal direction of the support arm profile member (2) and is formed to be bulged in cross-section, and at least one interlocking unit (16), which extends in the longitudinal direction of the support arm profile member (2) and mechanically positively engages in the two connecting receptacles (13, 14) and which comprises at least two interlocking components (17, 18) respectively engaging in the two connecting receptacles (13, 14) and at least one bracing element (19), which is arranged between the two interlocking components (17, 18) and by which the two interlocking components (17, 18) are acted on in a direction away from one another by force.

6. Support arm (1) according to any one of claims 3 to 5, **characterised in that** at least one cavity (15) able to be loaded by a medium under pressure and extending in the longitudinal direction of the support arm profile member (2) is arranged within the connecting projection (20) or the interlocking element (12, 22) or the bracing element (19).

7. Support arm (1) according to claim 6, **characterised in that** the interlocking element (12, 22) or the bracing element (19) is plastically deformed through loading the cavity (15) with the medium under pressure.

8. Support arm (1) according to any one of claims 4 to 7, **characterised in that** the interlocking element (12, 22) is an extruded profile member or the interlocking components (17, 18) and/or the bracing element (19) are extruded profile members or is an extruded profile member.

9. Support arm (1) according to any one of claims 1 to 8, **characterised in that** each metal profile member (3) is of L-shaped form in cross-section, wherein four metal profile members (3) are connected together in pairs in such a way in each instance via at least one mechanically positive connection (4) that the support arm profile member (2) is formed as a cavity profile member with rectangular cross-section, wherein the mechanically positive connections (4) are arranged at the side walls (7, 8, 9, 10), which extend in the longitudinal direction of the support arm profile member (2), of the support arm profile member (2).

10. Support arm (1) according to any one of claims 1 to 8, **characterised in that** each metal profile member (21) is of U-shaped form in cross-section, wherein two metal profile members (21) are so connected together by way of at least two mechanically positive connections (4) that the support arm profile member (2) is formed as a cavity profile member of rectangular cross-section, wherein the mechanically positive connections (4) are arranged at the side walls (7, 9; 8, 10), which extend in longitudinal direction of the support arm profile member (2) and parallelly to one another, of the support arm profile member (2).

11. Support arm (1) according to any one of claims 1 to 10, **characterised by** at least two support arm profile members (2) which are connected together by material couple and which are connected together by material couple through electron beam welding or friction stir welding.

12. Method of producing a support arm (1) for supporting an electrode of an arc furnace, wherein at least one support arm profile member (2) is produced in that at least two metal profile members (3, 21, 23) are produced with use of an extrusion method and are connected together, **characterised in that** the metal profile members (3, 21, 23) are mechanically positively connected together by means of at least one mechanically positive connection (4).

13. Method according to claim 12, **characterised in that** components, which co-operate mechanically positively, of the mechanically positive connection (4) are braced relative to one another.

14. Method according to claim 12 or 13, **characterised in that** at least two support arm profile members (2) are produced and are connected together by material couple through electron beam welding or friction stir welding.

## Revendications

1. Bras de support (1) destiné à supporter une électrode d'un four à arc électrique, présentant au moins un profilé de bras de support (2) qui comprend au moins deux profilés métalliques obtenus par extrusion (3, 21, 23), reliés l'un à l'autre, **caractérisé en ce que** les profilés métalliques (3, 21, 23) sont reliés l'un à l'autre par l'intermédiaire d'au moins une liaison (4) du type à complémentarité de forme.

2. Bras de support (1) selon la revendication 1, **caractérisé en ce que** la liaison (4) du type à complémentarité de forme est réalisée directement par l'intermédiaire de tronçons réciproquement limitrophes des profilés métalliques (3, 21, 23) ou par l'intermédiaire d'au moins un élément de liaison supplémentaire (12, 17, 18, 22) relié à ces tronçons par complémentarité de forme.

3. Bras de support (1) selon la revendication 2, **caractérisé en ce que** la liaison (4) du type à complémentarité de forme présente au moins un logement de liaison (13) réalisé sous une forme bombée en section transversale, s'étendant dans la direction longitudinale du profilé de bras de support (2), disposé contre le tronçon de l'un des profilés métalliques (3, 21, 23) et au moins une saillie de liaison (20) s'étendant dans la direction longitudinale du profilé de bras de support (2), disposée contre le tronçon de l'autre profilé métallique (3, 21, 23) ; dans lequel la section transversale de la saillie de liaison (20) est réalisée de manière complémentaire à la section transversale du logement de liaison (13).

4. Bras de support (1) selon la revendication 2, **caractérisé en ce que** la liaison (4) du type à complémentarité de forme présente au moins un logement de liaison (13) réalisé sous une forme bombée en section transversale, s'étendant dans la direction longitudinale du profilé de bras de support (2), disposé contre le tronçon de l'un des profilés métalliques (3, 21, 23), au moins un logement de liaison supplémentaire (14) réalisé sous une forme bombée en section transversale, s'étendant dans la direction longitudinale du profilé de bras de support (2), disposé contre le tronçon de l'autre profilé métallique (3, 21, 23), et au moins un élément procurant une complémentarité de forme (12, 22) qui vient s'insérer par complémentarité de forme dans les deux logements de liaison (13, 14), s'étendant dans la direction longitudinale de profilé de bras de support (2).

5. Bras de support (1) selon la revendication 2, **caractérisé en ce que** la liaison (4) du type à complémentarité de forme présente au moins un logement de liaison (13) réalisé sous une forme bombée en section transversale, s'étendant dans la direction longitudinale du profilé de bras de support (2), disposé contre le tronçon de l'un des profilés métalliques (3, 21, 23), au moins un logement de liaison supplémentaire (14) réalisé sous une forme bombée en section transversale, s'étendant dans la direction longitudinale du profilé de bras de support (2), disposé contre le tronçon de l'autre profilé métallique (3, 21, 23), et au moins une unité procurant une complémentarité de forme (16) qui vient s'insérer par complémentarité de forme dans les deux logements de liaison (13, 14), s'étendant dans la direction longitudinale du profilé de bras de support (2), unité qui présente au moins deux composants (17, 18) procurant une complémentarité de forme qui viennent s'insérer dans les deux logements de liaison (13, 14) et au moins un élément (19) procurant un serrage disposé entre les deux composants (17, 18) procurant une complémentarité de forme, avec lequel les deux composants (17, 18) procurant une complémentarité de forme sont sollicités avec une force destinée à les écarter l'un de l'autre.

6. Bras de support (1) selon l'une quelconque des revendications 3 à 5, **caractérisé en ce que**, au sein de la saillie de liaison (20), respectivement de l'élément procurant une complémentarité de forme (12, 22), respectivement de l'élément (19) procurant un serrage, est disposé au moins un espace creux (15) s'étendant dans la direction longitudinale du profilé de bras de support (2), qui peut être sollicité avec un milieu mis sous pression.

7. Bras de support (1) selon la revendication 6, **caractérisé en ce que** l'élément procurant une complémentarité de forme (12, 22), respectivement l'élément (19) procurant un serrage sont soumis à une déformation plastique par l'intermédiaire d'une sollicitation de l'espace creux (15) avec le milieu mis sous pression.

8. Bras de support (1) selon l'une quelconque des revendications 4 à 7, **caractérisé en ce que** l'élément procurant une complémentarité de forme (12, 22) représente un profilé obtenu par extrusion, respectivement **en ce que** les composants (17, 18) procurant une complémentarité de forme et/ou l'élément (19) procurant un serrage représentent des profilés obtenus par extrusion.

9. Bras de support (1) selon l'une quelconque des revendications 1 à 8, **caractérisé en ce que** chaque profilé métallique (3) est réalisé en forme de L en section transversale ; dans lequel, quatre profilés métalliques (3) sont reliés les uns aux autres par paires via respectivement au moins une liaison (4) du type à complémentarité de forme, d'une manière telle que le profilé de bras de support (2) est réalisé sous la forme d'un profilé creux possédant une section transversale rectangulaire ; dans lequel les liaisons (4) du type à complémentarité de forme sont disposées contre les parois latérales (7, 8, 9, 10) du profilé de bras de support (2) qui s'étendent dans la direction longitudinale du profilé de bras de support (2).

10. Bras de support (1) selon l'une quelconque des revendications 1 à 8, **caractérisé en ce que** chaque profilé métallique (21) est réalisé en forme de U en section transversale ; dans lequel, deux profilés métalliques (21) sont reliés l'un à l'autre par l'intermédiaire d'au moins deux liaisons (4) du type à complémentarité de forme, d'une manière telle que le profilé de bras de support (2) est réalisé sous la forme d'un profilé creux possédant une section transversale rectangulaire ; dans lequel les liaisons (4) du type à complémentarité de forme sont disposées contre les parois latérales (7, 8, 9, 10) du profilé de bras de support (2) qui s'étendent dans la direction longitudinale du profilé de bras de support (2) et parallèlement les une aux autres.

11. Bras de support (1) selon l'une quelconque des revendications 1 à 10, **caractérisé par** au moins deux profilés de bras de support (2) reliés l'un à l'autre par complémentarité de matière, qui sont reliés l'un à l'autre par complémentarité de matière par l'intermédiaire d'un soudage par bombardement électronique ou d'un soudage par friction-malaxage.

12. Procédé pour la fabrication d'un bras de support (1) destiné à supporter une électrode d'un four à arc électrique ; dans lequel on fabrique au moins un profilé de bras de support (2) en construisant au moins deux profilés métalliques (3, 21, 23) par le biais de la mise en oeuvre d'un procédé d'extrusion et en les reliant l'un à l'autre, **caractérisé en ce que** les profilés métalliques (3, 21, 23) sont reliés l'un à l'autre par complémentarité de forme au moyen d'au moins une liaison (4) procurant une complémentarité de forme.

13. Procédé selon la revendication 12, **caractérisé en ce que** des composants, de la liaison (4) procurant une complémentarité de forme, qui coopèrent par complémentarité de forme, sont pressés l'un contre l'autre.

14. Procédé selon la revendication 12 ou 13, **caractérisé en ce que** l'on fabrique au moins deux profilés de bras de support (2) et on les relie l'un à l'autre par complémentarité de matière par l'intermédiaire d'un soudage par bombardement électronique ou d'un soudage par friction-malaxage.
